# EUROPÄISCHE PATENTSCHRIFT

(11) **EP 4 072 906 B1**
(45) Veröffentlichungstag und Bekanntmachung des Hinweises auf die Patenterteilung: **06.12.2023**
(21) Anmeldenummer: 20792562.9
(22) Anmeldetag: 08.10.2020
(51) Int. Cl.: B60R 21/264, F42B 3/04

(54) **GASGENERATOR**
GAS GENERATOR
GÉNÉRATEUR DE GAZ

(30) Priorität: 13.12.2019 DE 102019134263
(43) Veröffentlichungstag der Anmeldung: 19.10.2022
(73) Patentinhaber: ZF Airbag Germany GmbH, 84544 Aschau a. Inn (DE)
(72) Erfinder: ASENKERSCHBAUMER, Dominik, 84524 Neuötting (DE); RUCKDESCHEL, Rolf, 84431 Heldenstein (DE); WEBER, Bernd, 84513 Erharting (DE); LAST, Detlef, 84453 Mühldorf am Inn (DE)
(74) Vertreter: ZF Patentabteilung - DIPS
(86) Internationale Anmeldenummer: PCT/EP2020/078206
(87) Internationale Veröffentlichungsnummer: WO 2021/115662

(56) Entgegenhaltungen:
- EP-A1- 0 653 336
- DE-U1- 29 818 957
- DE-U1-202006 004 008
- JP-A- 2018 187 985

## Beschreibung

Die Erfindung betrifft einen Gasgenerator für eine Sicherheitseinrichtung in einem Fahrzeug.

Gasgeneratoren liefern beispielsweise Gas zum Füllen eines Gassacks oder für den Antrieb eines Gurtstraffers. Der Gasgenerator enthält dafür in einer Brennkammer einen gaserzeugenden pyrotechnischen Treibstoff, der bei Bedarf aktiviert werden kann und sich unter Bildung von gasförmigen Produkten sehr schnell zersetzt.

Die pyrotechnischen Treibstoffe sind ausbilanzierte Mischungen von organischen oder anorganischen Brennstoffen und Oxidationsmitteln, die in der Regel Stickstoff und Kohlenstoff enthalten. Die Treibstoffe können zur Steuerung der Abbrandcharakteristik in eine geeignete Form wie Tabletten, Extrudate und Granulate verschiedenster Geometrie gebracht werden.

Durch Bewegungen des Treibstoffs innerhalb der Brennkammer, verursacht beispielsweise durch Vibrationen, können Rasselgeräusche verursacht werden. Um unerwünschte Bewegungen des Treibstoffs innerhalb der Brennkammer zu verhindern, werden Füllkörper zur Fixierung des Treibstoffs in die Brennkammer eingesetzt.

Als Füllkörper kommen üblicherweise elastische Draht- oder Blechkörper, Silikonkörper oder Silikonschaum zum Einsatz. Das Dokument JP 2018 187985 A offenbart Füllkörper aus weiteren Materialien wie z.B. aus Fasern, Wolle oder geschäumten Kunststoffen.

Draht- oder Blechkörper weisen jedoch ein hohes Gewicht und eine geringe Dauerelastizität auf. Zudem können sie einen negativen Einfluss auf die Leistung des Gasgenerators haben, da sie die bei der Reaktion des pyrotechnischen Treibstoffs erzeugte Wärme wenigstens teilweise aufnehmen können und dadurch das Gas abkühlen. Zudem können derartige Bauteile die aufgenommene Wärme an weitere Bauteile abgeben, wodurch beispielsweise in mehrstufigen Gasgeneratoren eine ungewollte Überzündung auf weitere Brennkammern auftreten kann.

Silikonformkörper sind vergleichsweise teuer und weisen nur eine geringe Volumenausgleichskapazität auf. Silikonschäume gleichen mehr Volumen aus, können jedoch während des Abbrandes eine zu geringe Stabilität aufweisen. Zudem können durch die Zersetzung des Silikons nachteilige Gase, brennbare Gase und/oder Feinstaub entstehen.

Die Aufgabe der Erfindung ist es, einen kostengünstigen Gasgenerator bereitzustellen, der sich für den Einsatz in Sicherheitseinrichtungen eignet und mit dem die Nachteile des Standes der Technik überwunden werden können.

Die Aufgabe wird erfindungsgemäß gelöst durch einen Gasgenerator für eine Sicherheitseinrichtung in einem Fahrzeug, mit einem Gehäuse und einer innerhalb des Gehäuses befindlichen Brennkammer, wobei in der Brennkammer ein pyrotechnischer Treibstoff und zumindest ein Füllkörper aufgenommen ist, und wobei der Füllkörper aus einem Melaminharzschaum gebildet ist.

Der zumindest eine Füllkörper aus Melaminharzschaum stellt eine hohe Volumenausgleichsfähigkeit zur Verfügung, ist langzeitstabil und kostengünstig verfügbar.

Melaminharze sind Kunstharze, die auf Melamin und Formaldehyd basieren und mittels Polykondensation ein verzweigtes Netzwerk bilden können. Es können auch Melamin-Phenol-Formaldehyd-Harze und/oder Melamin-Harnstoff-Formaldehyd-Harze als Melaminharz verwendet werden.

Ein Vorteil der Erfindung ist, dass sich die Füllkörper aus Melaminharzschaum leistungsneutral zersetzen. Unter dem Begriff "leistungsneutral" wird hier verstanden, dass die Zersetzung des Füllkörpers in etwa so viel Energie verbraucht, wie die Umsetzung des Melaminharzschaums in gasförmige Reaktionsprodukte liefert, insbesondere durch die Umsetzung des im Melaminharzschaums vorhandenen Kohlenstoffs zu CO₂.

Melaminharzschäume weisen weiterhin den Vorteil auf, dass sie sich lediglich zu N₂ und CO₂ zersetzen. Entsprechend entstehen bei der Zersetzung des wenigstens einen Füllkörpers aus Melaminharzschaum keine nachteiligen Gase. Weiterhin wird durch die Zersetzung des Melaminharzschaums zusätzliches Gas erzeugt, das zur weiteren Druckerhöhung und zur Gasausbeute des Gasgenerators beiträgt.

Melaminharzschaum besitzt zudem eine geringe thermische Leitfähigkeit. Dadurch wirkt sich die Zersetzung des Melaminharzschaums nicht negativ auf die Gasgeneratorleistung aus und ein ungewolltes Erhitzen von nahe des wenigstens einen Füllkörpers angeordneten Bauteilen des Gasgenerators wird verhindert.

Der wenigstens eine Füllkörper steht insbesondere mit dem pyrotechnischen Treibstoff in Kontakt, sodass sich die Auswahl des Melaminharzschaums insbesondere nach der Verträglichkeit mit dem gewählten Treibstoff richten kann.

Der pyrotechnische Treibstoff kann einen Brennstoff und optional ein Oxidationsmittel enthalten. Grundsätzlich kommen alle dem Fachmann aus dem Stand der Technik bekannten pyrotechnischen Treibstoffe in Frage.

Der Brennstoff kann ein Material umfassen, das ausgewählt ist aus der Gruppe bestehend aus Bor, Aluminium, Silicium, Magnesium, Eisen, Titan, Wolfram, Kupfer, Kohlenstoff, Zirkonium, Legierungen der zuvor genannten Elemente, Nitrotriazolon, Nitrocellulose, Guanidinverbindungen, insbesondere Guanidinnitrat, und/oder Kombinationen davon.

Das Oxidationsmittel kann ein Material umfassen, das ausgewählt ist aus der Gruppe, bestehend aus Kaliumperchlorat, Kaliumnitrat, Kaliumchlorat, Bariumnitrat, Strontiumnitrat, Natriumnitrat, Natriumperchlorat, Lithiumnitrat, Eisenoxid, Kupferoxid, Ammoniumperchlorat, Ammoniumnitrat und/oder Kombinationen davon.

In einer Variante handelt es sich bei dem Melaminharzschaum um einen duroplastischen Polymerschaum.

Melaminharze lassen sich durch eine fortschreitende Polykondensation zu einem verzweigten Netzwerk polymerisieren, die duroplastische Polymerschäume ergeben. Insbesondere ist der Melaminharzschaum durchpolymerisiert, wobei darunter verstanden wird, dass im Wesentlichen alle freien funktionellen Gruppen im Polymerschaum abreagiert sind, insbesondere alle freien Hydroxyl- und Aminogruppen. In diesem Fall liegen ausschließlich an den freien Kettenenden des Polymerschaums noch freie funktionelle Gruppen vor.

In einer weiteren Variante handelt es sich bei dem Melaminharzschaum um einen offenzelligen Polymerschaum. Durch die offenzellige Struktur kann in diesem Fall eine besonders gute Schallabsorption erfolgen, da Schallwellen nicht lediglich von der Oberfläche des wenigstens einen Füllkörpers reflektiert werden, sondern in diesen eindringen können. Die Schallenergie kann anschließend im Netzwerk des Melaminharzschaums abgebaut werden. Durch die gute Schallabsorption werden Rasselgeräusche im Gasgenerator unterdrückt. Rasselgeräusche können beispielsweise durch leichte Vibrationen eines Fahrzeugs im Fahrbetrieb entstehen, wenn der Gasgenerator an oder in diesem Fahrzeug verbaut ist.

Durch die offenzellige Struktur erhöht sich zudem die Flexibilität in der Formgebung des Melaminharzschaums bzw. des Füllkörpers aus dem Melaminharzschaum.

Der Füllkörper ist insbesondere elastisch verformbar. Auf diese Weise wird eine besonders gute Dämpfungswirkung des Füllkörpers aus dem Melaminharzschaum erreicht, bei gleichzeitigem Erhalt der Langzeitstabilität.

Der zumindest eine Füllkörper kann eine Zersetzungstemperatur von mindestens 200 °C aufweisen, bevorzugt von mindestens 240 °C und besonders bevorzugt von mindestens 300 °C, sowie eine Zersetzungstemperatur von höchstens 400 °C. Bei einer niedrigeren Zersetzungstemperatur kann es zu ungewollten Beschädigungen des Füllkörpers über die Lebensdauer des Gasgenerators hinweg oder einem zu frühen Zersetzen kommen, während eine höhere Zersetzungstemperatur den vollständigen Abbrand des Füllkörpers im Auslösefall des Gasgenerators behindern kann.

Der zumindest eine Füllkörper kann eine Dichte im Bereich von 3 bis 15 g/L aufweisen, bevorzugt von 4 bis 12 g/L, besonders bevorzugt von 4 bis 9,5 g/L. Auf diese Weise wird ein sehr geringes Gewicht des zumindest einen Füllkörpers erreicht, wodurch sich das Gesamtgewicht des Gasgenerators verringern lässt.

Der zumindest eine Füllkörper kann in Form eines Quaders, eines Zylinders, eines Hohlzylinders, einer Kugel, einer Matte, einer Scheibe und/oder einer Lochscheibe vorliegen.

Die Form des zumindest einen Füllkörpers kann insbesondere an die Geometrie des Gasgenerators sowie an die Geometrie des verwendeten pyrotechnischen Treibstoffs angepasst werden.

Der zumindest eine Füllkörper kann zwischen dem pyrotechnischen Treibstoff angeordnet sein und/oder diesen umschließen.

Melaminharzschäume können besonders einfach in einer Vielzahl von Formen bereitgestellt werden. Dazu werden üblicherweise zunächst Blöcke aus dem Melaminharzschaum hergestellt, die anschließend zu Matten zerteilt werden, beispielsweise mittels eines Messergatters. Aus den Matten können anschließend beliebige Geometrien ausgestanzt werden.

Der zumindest eine Füllkörper ist insbesondere an den Wänden der Brennkammer angeordnet, sodass ein Anschlagen des pyrotechnischen Treibstoffs an den Wänden der Brennkammer verhindert wird.

In einer Variante weist der Gasgenerator mehrere Brennkammern auf, in die jeweils ein pyrotechnischer Treibstoff und zumindest ein Füllkörper aufgenommen ist. Aufgrund der geringen thermischen Leitfähigkeit der Füllkörper können die Brennkammern thermisch voneinander entkoppelt werden. Auf diese Weise wird verhindert, dass die bei Anzünden des Treibstoffs in einer ersten Brennkammer entstehende Wärme ungewollt über den Füllkörper an eine weitere Brennkammer geleitet wird und dort ein Anzünden des Treibstoffs in der weiteren Brennkammer verursacht. Somit kann die Kontrolle über das Verhalten des Gasgenerators im Auslösefall weiter erhöht werden.

Mit Ausnahme des zumindest einen Füllkörpers aus Melaminharzschaum weist der Gasgenerator insbesondere keine weiteren Volumenausgleichsmittel auf, das heißt, ausschließlich der Melaminharzschaum ist als Füllkörper vorhanden. Entsprechend ist in dieser Variante insbesondere kein Volumenausgleichsmittel aus Draht, Blech, Silikonelastomer und/oder Silikonschaum vorgesehen.

Der Gasgenerator kann auch Bestandteil eines Moduls sein, das zusätzlich einen aufblasbaren Gassack und eine Befestigungseinrichtung zur Anbringung des Moduls in einem Fahrzeug umfasst.

Auch kann der erfindungsgemäße Gasgenerator Bestandteil eines Fahrzeugsicherheitssystems sein, insbesondere zum Schutz einer Person, beispielsweise eines Insassen des Fahrzeugs und/oder Passanten, mit einem von dem Gasgenerator aufblasbaren Gassack, insbesondere als Teil eines Moduls, und einer elektronischen Steuereinheit, mittels der der erfindungsgemäße Gasgenerator bei Vorliegen einer Auslösesituation aktivierbar ist.

Weitere Eigenschaften und Vorteile der Erfindung ergeben sich aus der nachfolgenden Beschreibung beispielhafter Ausführungsformen, die nicht in einem einschränkenden Sinn verstanden werden sollen, und den Zeichnungen. In diesen zeigen:
- Figur 1 einen erfindungsgemäßen Gasgenerator,
- Figur 2 einen Vergleich von Kannendruck-Kurven zwischen einem Referenz-Gasgenerator und einem erfindungsgemäßen Gasgenerator.

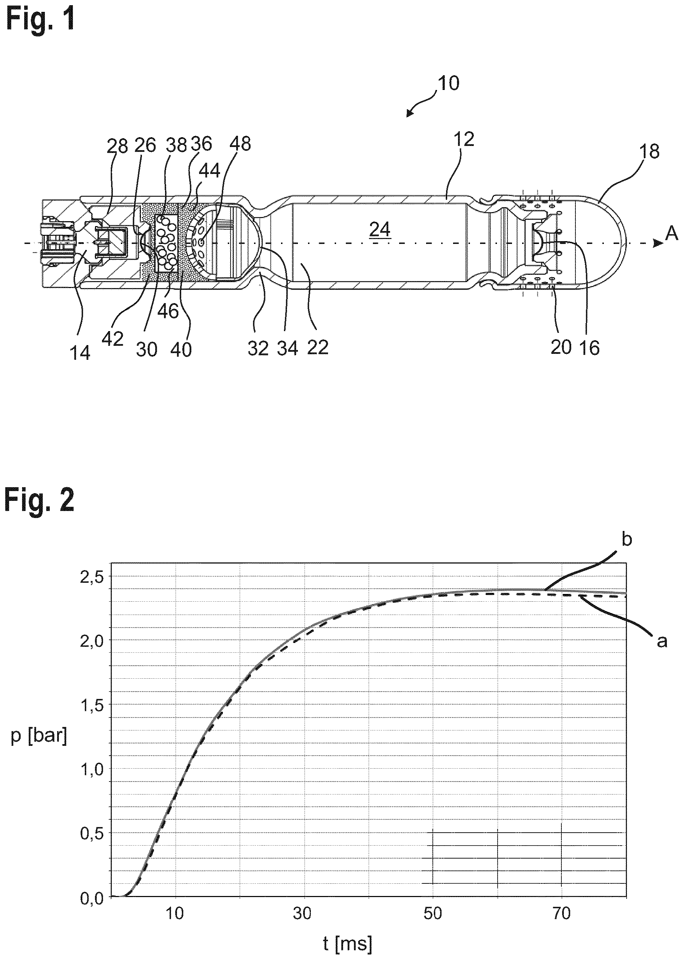

Figur 1 zeigt einen erfindungsgemäßen Gasgenerator 10. Der Gasgenerator 10 weist ein langgestrecktes, zylindrisches Gehäuse 12 auf, an dessen erstem axialen Ende ein Anzünder 14 vorgesehen ist und an dessen zweitem axialen Ende das Gehäuse 12 durch eine Membran 16 gegenüber der Umgebung des Gasgenerators 10 verschlossen ist.

Ein mit Ausströmöffnungen 20 versehener Diffusor 18 schließt sich in axialer Richtung an das Gehäuse 12 an und leitet das aus dem Diffusor 18 ausströmende Gas zu der zu aktivierenden Sicherheitseinrichtung (nicht dargestellt).

Das Gehäuse 12 umgrenzt eine Druckkammer 22, die in axialer Richtung A an den Anzünder 14 anschließt. Die Druckkammer 22 ist mit einem komprimierten Druckgas 24 gefüllt.

Das Druckgas 24 umfasst mindestens ein Inertgas, beispielsweise Argon, Helium und/oder Stickstoff oder ein anderes geeignetes Gasgemisch, und kann außerdem ein gasförmiges Oxidationsmittel enthalten. Das gasförmige Oxidationsmittel besteht in diesem Fall insbesondere zu einem Hauptanteil, das heißt zu mehr als 50 Molprozent, aus Sauerstoff.

Der Anzünder 14 ist druck- und gasdicht gegenüber der Druckkammer 22 abgetrennt. Zu diesem Zweck ist eine Öffnung 26 in einem Anzündergehäuse 28, in dem der Anzünder 14 aufgenommen ist, zur Druckkammer 22 hin mit einer Anzündermembran 30 verschlossen.

Das Gehäuse 12 bildet das Außengehäuse des Gasgenerators 10 und ist mit einer umlaufenden Ringnut 32 versehen, an der ein Berstelement 34 gehalten ist.

Das Berstelement 34 teilt die Druckkammer 22 unter Bildung einer in axialer Richtung A an den Anzünder 14 angrenzenden Brennkammer 36.

In der Brennkammer 36 ist ein pyrotechnischer Treibstoff 38 sowie ein Füllkörper 40 angeordnet.

Der pyrotechnische Treibstoff 38 liegt in der gezeigten Ausführungsform in Form von Tabletten vor, die vom Füllkörper 40 umschlossen innerhalb der Brennkammer 36 vorliegen.

Der pyrotechnische Treibstoff 38 umfasst als Brennstoff eine Guanidinverbindung, insbesondere Guanidinnitrat.

Der Füllkörper 40 ist in der gezeigten Ausführungsformen aus einem ersten Füllkörperteil 42 und einem zweiten Füllkörperteil 44 zusammengesetzt.

Das erste Füllkörperteil 42 ist hier so geformt, dass ein Hohlraum 46 entsteht, in dem der pyrotechnische Treibstoff 38 aufgenommen ist. Insbesondere ist das erste Füllkörperteil 42 in Form eines einseitig offenen Hohlzylinders gebildet, dessen freies Ende mit dem zweiten Füllkörperteil 44 abgeschlossen ist.

Der als Hohlzylinder ausgebildete Füllkörper 40 kann form- oder kraftschlüssig an dem Gehäuse 12 anliegen, oder sich bis zur Ringnut 32 erstrecken und so in der Druckkammer 22 fixiert sein.

Der Füllkörper 40 ist aus einem duroplastischen Melaminharzschaum gebildet. Der Melaminharzschaum weist zudem eine offenzellige Struktur auf und ist elastisch verformbar.

Der Füllkörper 40 weist eine Zersetzungstemperatur von mindestens 200 °C auf, bevorzugt von mindestens 240 °C und besonders bevorzugt von mindestens 300 °C, sowie eine Zersetzungstemperatur von höchstens 400 °C.

Des Weiteren weist der Füllkörper 40 eine Dichte im Bereich von 3 bis 15 g/L auf, bevorzugt von 4 bis 12 g/L, besonders bevorzugt von 4 bis 9,5 g/L.

Grundsätzlich können sich das erste Füllkörperteil 42 und das zweite Füllkörperteil 44 auch in ihrer Zusammensetzung und ihren Eigenschaften unterscheiden, beispielsweise unterschiedliche Zersetzungstemperaturen und/oder Dichten aufweisen. Auf diese Weise kann das Verhalten des Gasgenerators 10 im Auslösefall weiter maßgeschneidert werden.

Zusätzlich ist vor dem Berstelement 34 ein Sieb 48 vorgesehen, das in der Brennkammer 36 entgegengesetzt zum Anzünder 14 angeordnet ist.

Ein solcher Gasgenerator kann insbesondere dazu ausgelegt sein, dass durch die Zerstörung des Berstelements 34 eine Schockwelle ausgelöst wird, welche die Membran 16 schnell und sicher öffnet.

Alternativ zu der in Figur 1 gezeigten Ausführungsform kann das Berstelement 34 auch entfallen. Die Brennkammer 36 und die Druckkammer 22 sind dann nur durch das Sieb 48 voneinander getrennt, welches an der umlaufenden Ringnut 32 festgelegt sein kann. Über das Sieb 48 wird außerdem ein Druckausgleich hergestellt, sodass der pyrotechnische Treibstoff 38 und der Füllkörper 40 in direktem Kontakt mit dem Druckgas 24 und dem optional darin enthaltenen Oxidationsmittel stehen kann.

Der hier gezeigte bzw. beschriebene Gasgenerator, der das Druckgas 24 aufweist, kann auch als Hybridgasgenerator, gegebenenfalls auch als Kaltgasgenerator bezeichnet werden, da er einen Anteil an gespeichertem Druckgas aufweist. Die Erfindung ist allerdings nicht darauf beschränkt, was bedeutet, dass ebenso sogenannte "reine" pyrotechnische Gasgeneratoren, welche frei von einem Anteil eines gespeicherten Druckgases sind, ebenfalls von der Erfindung umfasst sind. Anders Ausgedrückt ist für die Erfindung das Vorhandensein eines vorgespeicherten Druckgases innerhalb des Gasgenerators nicht erforderlich bzw. nicht entscheidend.

Bei der Aktivierung des Gasgenerators 10 erhält der Anzünder 14 auf bekanntem Weg ein elektrisches Signal, um diesen zu zünden. Der plötzliche Druckanstieg im Anzünder 14, der damit verbunden ist, zerstört zunächst die Anzündermembran 30. Gleichzeitig bzw. unmittelbar danach wird der Füllkörper 40 und der pyrotechnische Treibstoff 38 in der Brennkammer 36 durch die vom Anzünder 14 freigesetzten heißen Gase und/oder Partikel erwärmt, so dass eine Umsetzung des pyrotechnischen Treibstoffs 38 einsetzt.

Durch die bei der Umsetzung des pyrotechnischen Treibstoffs 38 entstehende Wärme zersetzt sich auch der Füllkörper 40, wobei sich der Füllkörper 40 leistungsneutral zersetzt und lediglich N₂ und CO₂ als Reaktionsprodukte des Füllkörpers 40 entstehen.

Die bei dieser Umsetzung auftretende Wärmeentwicklung erhitzt zudem das Druckgas 24, so dass ein Überdruck entsteht. Durch diesen Überdruck wird zunächst das Berstelement 34 zerstört und danach die Membran 16 schlagartig geöffnet. Das erwärmte Druckgas 24 kann dann aus der Druckkammer 22 über den Diffusor 18 und die Ausströmöffnungen 20 in die Umgebung ausströmen und die Sicherheitseinrichtung betätigen.

Die Zerstörung des Berstelements 34 kann ferner eine Schockwelle auslösen, welche sich durch den Druckkammer 22 hindurch fortpflanzt und die Membran 16 sehr schnell öffnet.

Die Schockwelle kann auch bereits von der Anzündermembran 30 oder auch vom Anzünder 14 selbst ausgehen. Der Füllkörper 40 kann dann zur Verstärkung und/oder Steuerung der Schockwelle verwendet werden.

Wie bereits weiter oben erwähnt, stellt der in Figur 1 dargestellte Gasgenerator 10 einen Hybridgasgenerator dar. Grundsätzlich kann der erfindungsgemäße Gasgenerator jeder beliebige Typ an Gasgenerator sein, in welchem ein Füllkörper verwendet wird, beispielsweise ein pyrotechnischer Gasgenerator.

In Figur 2 sind Druck-Zeit-Kurven eines sogenannten "Kannenversuchs" dargestellt. Beim Kannenversuch wird ein Standardgasgenerator mit einem pyrotechnischen Treibsatz beladen und in einer geschlossenen Testkanne mit definiertem Volumen (60 Liter) aktiviert. Während des Abbrandes wird der Druck innerhalb der Kanne gemessen und auf diese Weise eine Druck-Zeit-Kurve erhalten (in Figur 2 Druck p in bar und Zeit t in Millisekunden).

Die Druck-Zeit-Kurve kann zur ballistischen Charakterisierung des jeweiligen pyrotechnischen Treibsatzes sowie zur Beurteilung des Verhaltens der weiteren Bestandteile im Standardgasgenerator herangezogen werden.

Die in Figur 2 dargestellte Linie a gibt die Druck-Zeit-Kurve für einen Referenz-Gasgenerator an, der als Volumenausgleichsmittel ein Bauteil aus Metallgestrick verwendet, wie es im Stand der Technik bekannt ist.

Die Linie b gibt die Druck-Zeit-Kurve für einen erfindungsgemäßen Gasgenerator an, der als Volumenausgleichsmittel einen Füllkörper aus Melaminharzschaum verwendet.

In beiden Kannenversuchen wurden ansonsten gleiche Bauteile, gleiche Beladungen und gleiche Treibstoffzusammensetzungen verwendet. Entsprechend sind die relativen Änderungen zwischen den Versuchen auf die unterschiedlichen Volumenausgleichsmittel zurückzuführen.

Wie in Figur 2 zu sehen ist, entspricht der Kurvenverlauf des erfindungsgemäßen Gasgenerators im Wesentlichen demjenigen des Referenz-Gasgenerators. Entsprechend eignen sich Füllkörper aus Melaminharzschaum als Ersatz für bekannte Volumenausgleichsmittel, weisen jedoch zusätzlich die zuvor beschriebenen Vorteile auf.

Bei der Verwendung des Füllkörpers aus Melaminharzschaum wird zudem ein etwas schnellerer Druckaufbau und ein höherer Enddruck erreicht, wie aus den Druck-Zeit-Kurven insbesondere rund um eine Zeit t von 30 ms sowie am Ende des Kannenversuchs im erzielten Enddruck deutlich wird.

Die Unterschiede im erzielbaren Druck sind auf die zusätzlichen durch die Zersetzung des Melaminharzschaums freiwerdenden Gase sowie durch den nachteiligen Kühleffekt des Metallgestricks im Referenz-Gasgenerator zurückzuführen.

## Patentansprüche

1. Gasgenerator (10) für eine Sicherheitseinrichtung in einem Fahrzeug, mit einem Gehäuse (12) und einer innerhalb des Gehäuses (12) befindlichen Brennkammer (36), wobei in der Brennkammer (36) ein pyrotechnischer Treibstoff (38) und zumindest ein Füllkörper (40) aufgenommen ist, und wobei der Füllkörper (40) aus einem Melaminharzschaum gebildet ist.

2. Gasgenerator nach Anspruch 1, **dadurch gekennzeichnet, dass** es sich bei dem Melaminharzschaum um einen duroplastischen Polymerschaum handelt.

3. Gasgenerator nach Anspruch 1 oder 2, **dadurch gekennzeichnet, dass** es sich bei dem Melaminharzschaum um einen offenzelligen Polymerschaum handelt.

4. Gasgenerator nach einem der vorherigen Ansprüche, **dadurch gekennzeichnet, dass** der zumindest eine Füllkörper (40) elastisch verformbar ist.

5. Gasgenerator nach einem der vorherigen Ansprüche, **dadurch gekennzeichnet, dass** der zumindest eine Füllkörper (40) eine Zersetzungstemperatur von mindestens 200 °C aufweist, bevorzugt von mindestens 240 °C und besonders bevorzugt von mindestens 300 °C, sowie eine Zersetzungstemperatur von höchstens 400 °C.

6. Gasgenerator nach einem der vorherigen Ansprüche, **dadurch gekennzeichnet, dass** der zumindest eine Füllkörper (40) eine Dichte im Bereich von 3 bis 15 g/L aufweist, bevorzugt von 4 bis 12 g/L, besonders bevorzugt von 4 bis 9,5 g/L.

7. Gasgenerator nach einem der vorherigen Ansprüche, **dadurch gekennzeichnet, dass** der zumindest eine Füllkörper (40) in Form eines Quaders, eines Zylinders, eines Hohlzylinders, einer Kugel, einer Matte, einer Scheibe und/oder einer Lochscheibe vorliegt.

8. Gasgenerator nach einem der vorherigen Ansprüche, **dadurch gekennzeichnet, dass** der Gasgenerator (10) mehrere Brennkammern (36) aufweist, in die jeweils ein pyrotechnischer Treibstoff (38) und zumindest ein Füllkörper (40) aufgenommen ist.

9. Gasgenerator nach einem der vorherigen Ansprüche, **dadurch gekennzeichnet, dass** der Gasgenerator (10) keine weiteren Volumenausgleichsmittel aufweist.

## Claims

1. A gas generator (10) for a safety device in a vehicle, comprising a housing (12) and a combustion chamber (36) located inside the housing (12), wherein a pyrotechnic propellant (38) and at least one filling body (40) are accommodated in the combustion chamber (36), and wherein the filling body (40) is made of a melamine resin foam.

2. The gas generator according to claim 1, **characterized in that** the melamine resin foam is a thermosetting polymer foam.

3. The gas generator according to claim 1 or 2, **characterized in that** the melamine resin foam is an open-cell polymer foam.

4. The gas generator according to any one of the preceding claims, **characterized in that** the at least one filling body (40) is elastically deformable.

5. The gas generator according to any one of the preceding claims, **characterized in that** the at least one filling body (40) has a disintegration temperature of at least 200 °C, preferably of at least 240 °C and particularly preferred of at least 300 °C, as well as a maximum disintegration temperature of 400 °C.

6. The gas generator according to any one of the preceding claims, **characterized in that** the at least one filling body (40) has a density ranging from 3 to 15 g/l, preferably from 4 to 12 g/l, particularly preferred from 4 to 9.5 g/l.

7. The gas generator according to any one of the preceding claims, **characterized in that** the at least one filling body (40) is provided in the form of a cuboid, a cylinder, a hollow cylinder, a ball, a mat, a disk and/or a perforated disk.

8. The gas generator according to any one of the preceding claims, **characterized in that** the gas generator (10) includes plural combustion chambers (36) in each of which a pyrotechnic propellant (38) and at least one filling body (40) is accommodated.

9. The gas generator according to any one of the preceding claims, **characterized in that** the gas generator (10) includes no further volume compensation means.

## Revendications

1. Générateur de gaz (10) pour un dispositif de sécurité dans un véhicule, comprenant un boitier (12) et une chambre de combustion (36) se trouvant à l'intérieur du boitier (12), pour lequel un propergol pyrotechnique (38) et au moins un compensateur de volume (40) sont logés dans la chambre de combustion (36), et pour lequel le compensateur de volume (40) est formé d'une mousse de résine mélamine.

2. Générateur de gaz selon la revendication 1, **caractérisé en ce que** la mousse de résine mélamine est une mousse polymère thermodurcissable.

3. Générateur de gaz selon la revendication 1 ou 2, **caractérisé en ce que** la mousse de résine mélamine est une mousse polymère à cellules ouvertes.

4. Générateur de gaz selon l'une quelconque des revendications précédentes, **caractérisé en ce que** ledit au moins un compensateur de volume (40) est élastiquement déformable.

5. Générateur de gaz selon l'une des revendications précédentes, **caractérisé en ce que** ledit au moins un compensateur de volume (40) présente une température de décomposition d'au moins 200°C, de préférence d'au moins 240°C et plus préférentiellement d'au moins 300°C, ainsi qu'une température de décomposition d'au plus 400°C.

6. Générateur de gaz selon l'une quelconque des revendications précédentes, **caractérisé en ce que** ledit au moins un compensateur de volume (40) présente une densité comprise entre 3 et 15 g/L, de préférence entre 4 et 12 g/L, plus préférentiellement entre 4 et 9,5 g/L.

7. Générateur de gaz selon l'une quelconque des revendications précédentes, **caractérisé en ce que** ledit au moins un compensateur de volume (40) se présente sous la forme d'un parallélépipède rectangle, d'un cylindre, d'un cylindre creux, d'une sphère, d'un tapis, d'un disque et/ou d'un disque perforé.

8. Générateur de gaz selon l'une quelconque des revendications précédentes, **caractérisé en ce que** le générateur de gaz (10) comprend plusieurs chambres de combustion (36) dans chacune desquelles sont logés un propergol pyrotechnique (38) et au moins un compensateur de volume (40).

9. Générateur de gaz selon l'une quelconque des revendications précédentes, **caractérisé en ce que** le générateur de gaz (10) ne comporte pas d'autres moyens de compensation de volume.
